# EUROPEAN PATENT SPECIFICATION

(11) **EP 1 843 419 B1**
(45) Date of publication and mention of the grant of the patent: **12.10.2016**
(21) Application number: 07006960.4
(22) Date of filing: 03.04.2007
(51) Int. Cl.: H01M 8/0284, H01M 8/241, H01M 8/1018

(54) **Adhesive sealing member and a fuel cell using the same**
Anhaftendes Dichtungselement und Brennstoffzelle damit
Élément de scellage adhésif et pile à combustible l'utilisant

(30) Priority: 05.04.2006 JP 2006104290
(43) Date of publication of application: 10.10.2007
(73) Proprietor: Sumitomo Riko Company Limited, Komaki-shi, Aichi 485-8550 (JP)
(72) Inventor: Tanahashi, Hideaki, Komaki-shi Aichi-ken 485-8550 (JP); Ishioka, Yutaka, Komaki-shi Aichi-ken 485-8550 (JP); Nagano, Takuji, Aichi-ken 471-8571 (JP)
(74) Representative: Prüfer & Partner mbB Patentanwälte · Rechtsanwälte

(56) References cited:
- EP-A- 1 553 651
- DE-A1-102004 060 287
- JP-A- 60 000 066
- JP-A- 62 103 978
- JP-A- 63 187 575
- JP-A- 63 211 570
- JP-A- 2005 129 343
- US-A- 4 548 880
- US-A- 5 187 025

## Description

### BACKGROUND OF THE INVENTION

### 1. Field of the Invention

The present invention relates to an adhesive sealing member and a fuel cell using the same.

### 2. Description of Related Art

A fuel cell generally has a laminated body which is formed by laminating a plurality of single cells. The single cell is usually formed by sandwiching an electrolyte electrode assembly, in which an anode providing a fuel gas is bonded to one side of an electrolyte and a cathode providing an oxidant gas is bonded to the other side, between a pair of separators in which a gas flow path, a refrigerant path and the like are formed.

In this kind of fuel cell, the laminated body is tightened in a direction of the lamination, so that enough contact is obtained between the single cells.

In the fuel cell having such a structure, it is necessary to prevent the fuel gas and the oxidant gas from being mixed, or prevent the gases or a refrigerant from leaking. Accordingly, an adhesive sealing member is often provided to an area in which gas tightness and fluid tightness are required such as an area between the separator and the electrolyte and an area between the separators.

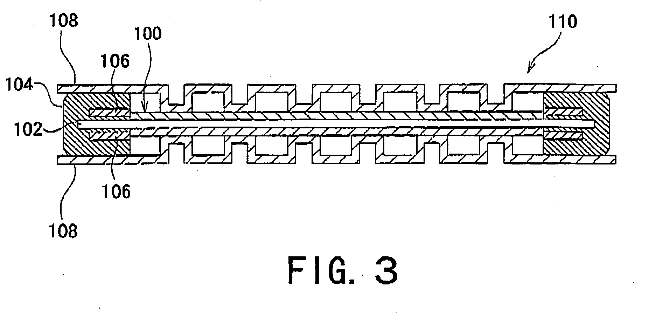

For example, Japanese Patent Application Unexamined Publication Nos. 2005-129343 and Hei 7-249417 disclose a polymer electrolyte fuel cell having a laminated body which is formed by laminating a plurality of single cells 110 shown in Fig. 3. In the single cell 110, a part of a polymer electrolyte membrane 102 which extends beyond electrodes in a membrane electrode assembly 100 is sandwiched between frames 106 via an adhesive sealing member 104, which are further sandwiched between separators 108 via the adhesive sealing member 104, so as to be integrated.

In addition, the reference documents disclose that the adhesive sealing member including a thermosetting resin such as an epoxy resin as a main component is used, and that an unhardened adhesive sealing member which is coated on frames and the like is hardened under a load at the time of cell manufacture.

An adhesive seal member used in a fuel cell is required to have favorable compressive creep resistance (hereinafter, referred to simply as creep resistance).

This is because if creep resistance of the adhesive sealing member is low, due to heat generated at the time of cell operation, gas tightness or fluid tightness in the area to be sealed is lowered, or the tightening of the laminated body is loosened, so that enough contact is not obtained between the single cells, lowering cell performance.

In this respect, the conventional adhesive sealing member, which includes the thermosetting resin such as the epoxy resin as the main component, is considered to be comparatively resistant to creep once it is hardened.

However, in the case of the conventional adhesive sealing member, it is necessary to impose a load on an unhardened adhesive sealing member and harden it while being compressed. Accordingly, the conventional adhesive sealing member has such a problem that it takes much time to complete hardening, causing unfavorable productivity of fuel cells.

DE 10 2004 060287 A1, a publication pursuant to Art. 54(3) EPC, discloses a membrane electrolyte assembly (MEA) comprising, sandwiched between contact areas of polymer electrolyte membranes (PEM) and electrode substrates, a thermoplastic resin capable of withstanding mechanical and chemical requirements by sustaining stability up to at least 120°C, for example, polymer materials like polyethylene, polypropylene, polyester, polyamide and the like, including mixtures and graft polymers and/or copolymers. It is further disclosed that the thermoplastic resins may be modified to realize specific physical and/or chemical properties prescribed for processing or operation of the full cell, and this can be accomplished by chemical modification of the basic material and/or by the addition of property-controlling additives.

JP-A-63 187575 discloses an electrolyte retaining electrode peripheral seal used in a phosphoric acid system fuel cell. The seal is prepared by mixing a constituent material such as silicon carbide (SiC) with a thermoplastic resin and other materials and sintering them. For the thermoplastic resin, PES, PEEK and PPS are used in combination.

JP-A-60 000066 discloses a sealing method for sealing edges of constituent elements of a fuel cell. To be more specific, a fluoric resin is molten and baked so as to be attached to the constituent elements, and the constituent elements are sealed by a non-adhesive sealing method.

US-A-5,187,025 discloses an acrylic film as an adhesive seal.

US-A-4,548,880 discloses a sealing member having a three-layer structure in which ionomer resin pieces are disposed on both sides of a PE piece. The sealing member includes the thermoplastic resin. However, there is no description of adding resin particles to the sealing member.

EP-A-1 553 651 discloses preparing fuel cell separators from a mixture material containing a thermoplastic resin such as EVA and EEA and carbon particles such as graphite.

JP-A-62 103978 discloses performing sealing by interposing a thermoplastic sealing member (e.g., PVDF) in a fuel cell, melting the sealing member at the operation temperature of the fuel cell, and filling very small boundary gaps with the molten sealing member.

JP-A-63 211570 discloses interposing thermoplastic resin closed-cell porous bodies between the components of a fuel cell and arranging the porous bodies to expand by heating so as to seal the places between the components.

US-A-2006/073 385 discloses an adhesive sealing member for fuel cells including a thermoplastic resin (e.g. polyolefin) and fillers (e.g. fibres or inorganic material).

JP-A-2000/129 137 discloses that fillers to be added to a curable resin are inorganic fillers of silica and talc,and organicfillerse.g.cross-linked acrylicresin, and the inorganic or organic filler is eluted out of the resin for surface roughing of the resin.

For this reason, as an alternative to the conventional adhesivesealing member,an adhesivesealing member having favorable creep resistance and providing excellent productivity of fuel cells is desired.

### SUMMARY OF THE INVENTION

An obj ect of the invention is to overcome the problems described above and to provide an adhesive sealing member having favorable creep resistance and providing excellent productivity of fuel cells and a fuel cell using the same.

The object of the invention is solved by the adhesive sealing member according to claim 1 and the fuel cell according to claim 6, which preferred embodiments as set forth in the dependent claims.

To achieve the objects and in accordance with the purpose of the present invention, an adhesive sealing member consistent with the present invention satisfies the following requirements:
(a) a requirement that the adhesive sealing member is suitable for use in a fuel cell;
(b) a requirement that the adhesive sealing member includes the thermoplastic resin as specified in claim 1 as a main component; and
(c) a requirement that the adhesive sealing member contains the resin particles as specified in claim 1.

A resin composing the resin particles is selected from a crosslinked acrylic polymer and a crosslinked styrene polymer. In addition, the adhesive sealing member consistent with the present invention preferably satisfies (d) a requirement that the adhesive sealing member is formed into film.

Meanwhile, the fuel cell consistent with the present invention is characterized in that sealing is made by using the adhesive sealing member as mentioned above.

Since the adhesive sealing member contains the resin particles of which a heat-resisting temperature is higher than the melting point of the thermoplastic resin being the main component, if the adhesive sealing member is heated and compressed, an amount of displacement in a direction of the compression is suppressed by the resin particles with a higher heat-resisting temperature than the thermoplastic resin thereabout, and compressive creep hardly occurs. Therefore, the adhesive sealing member has favorable creep resistance.

In addition, since the adhesive sealing member includes the thermoplastic resin as the main component, an adhesive property and a sealing property can be assured within a short period of time as compared to a conventional adhesive sealing member including a thermosetting resin as a main component, so that excellent productivity of fuel cells is provided. In addition, the adhesive sealing member has low susceptibility to impurities or soils and is excellent in handleability.

In the case of the resin composing the resin particles being the crosslinked acrylic polymer and/or the crosslinked styrene polymer, favorable creep resistance is easily obtained.

In the case of the adhesive sealingmember being formed into film, bonding of the adhesive sealing member to separators, frames and the like can avoid complicated positioning process. In addition, the formation into film makes it easy to perform continuous processing and the like. In addition, advance lamination of the adhesive sealing member to the frames and the like makes it easier to perform processing. Accordingly, productivity of fuel cells can be improved also in these respects.

Since sealing in the fuel cell is made by using the adhesive sealing member as mentioned above, excellent productivity is provided as compared to the conventional one. In addition, since the adhesive sealing member has favorable creep resistance, excellent cell reliability is provided.

Additional objects and advantages of the invention are set forth in the description which follows, are obvious from the description, or may be learned by practicing the invention.

### BRIEF DESCRIPTION OF THE DRAWINGS

The accompanying drawings, which are incorporated in and constitute a part of this specification, illustrate embodiments of the present invention and, together with the description, serve to explain the objects, advantages and principles of the invention. In the drawings,
Fig. 1 is a schematic diagram of a cross-section of a laminated sample for obtaining a creep amount consistent with Examples of the present invention;
Fig. 2 is a schematic diagram of a polymer electrolyte fuel cell consistent with Examples in which an adhesive sealing member consistent with Examples is used; and
Fig. 3 is a schematic diagram of one example of a conventional polymer electrolyte fuel cell.

### DETAILED DESCRIPTION OF THE PREFERRED EMBODIMENTS

A detailed description of one preferred embodiment of an adhesive sealing member and a fuel cell using the same embodied by the present invention is provided below with reference to the accompanying drawings.

### 1. Adhesive sealing member

The adhesive sealing member consistent with the present invention satisfies at least the following requirements (a) to (c), which will be described in order.

### (a) Requirement that the adhesive sealing member is used in a fuel cell

The adhesive sealing member is used in a fuel cell. As explained in the following description on the requirement (b), the adhesive sealing member includes a resin as a main component. Therefore, the adhesive sealing member can be used basically in any type of fuel cell that operates at a temperature such that a resin can be used as a component.

The adhesive sealing member can be adapted to be usable in a fuel cell.

Examples of a fuel cell to which the adhesive sealing member is applied include a polymer electrolyte fuel cell (PEFC) (including a direct methanol fuel cell (DMFC)) usually operated at temperatures of about 70 to 90°C.

In addition, an area in the fuel cell to which the adhesive sealing member is applied is basically different according to a type, a structure and the like of the fuel cell. Since the adhesive sealing member can be used as an alternative to a conventional adhesive sealing member, it can be applied to any area in the fuel cell in which an adhesive sealing member is conventionally used.

Examples of the area to which the adhesive sealing member is applied include an area inside a single cell such as an area between an electrolyte and a separator, an area between a frame supporting an electrolyte electrode assembly and an electrolyte and an area between a frame and a separator, and an area outside the single cell such as an area between separators of adjacent single cells.

The adhesive sealing member may be used in all of the areas to be sealed in the fuel cell, or may used in apart of the areas to be sealed. Inaddition, the adhesive sealing member may be used alone, or may be used in combination with a primer and the like.

### (b) Requirement that the adhesive sealing member includes the thermoplastic resin as specified in claim 1 as a main component

The adhesive sealing member includes a thermoplastic resin as amain component. In the adhesive sealing member, the expression "including a thermoplastic resin as a main component" means that 50 wt% or more of an organic component included in the adhesive sealing member is the thermoplastic resin.

The organic component included in the adhesive sealing member may be formed by the thermoplastic resin alone, or may arbitrarily include one or more accessory components such as a rubber and an elastomer as long as they are included within a range such that an adhesive property, a sealing property, elasticity and the like of the adhesive sealing member are not impaired.

Examples of the thermoplastic resin as the main component include a propylene resin such as polypropylene including propylene as a main polymerization component, an olefin thermoplastic resin such as polyethylene, cyclic olefin and polymethyl pentene. They may be employed by one sort alone or more than one sort in combination, optionally in combination with a polyamide thermoplastic resin such as nylon 11 and nylon 12.

Among the thermoplastic resins, the olefin thermoplastic resin is used since it has favorable water resistance, acid resistance and the like in a use environment.

The olefin thermoplastic resin preferably includes a propylene resin as a main component since a balance between processing temperature and high-temperature strength of the adhesive sealing member becomes excellent. The expression "including a propylene resin as a main component" means that, in the case of using the olefin thermoplastic resin as the thermoplastic resin, 50 wt% or more of the olefin thermoplastic resin included in the adhesive sealing member is the propylene resin.

Examples of the rubber and the elastomer as the arbitrary accessory components include an ethylene propylene rubber, polybutadiene, an isoprene rubber, and a styrene thermoplastic elastomer (SEBS, SBS, SEPS and the like). They may be employed by one sort alone or more than one sort in combination.

The adhesive sealing member may include one or more additives such as an antioxidant, a tackifier, a softener, a processing aid and a wax, which are generally used in the thermoplastic resin, the rubber, the elastomer and the like.

### (c) Requirement that the adhesive sealing member contains the resin particles as specified in claim 1

The adhesive sealing member contains resin particles. Examples of the form of the resin particles include a spherical form, a columnar form, a needle form, a plate form and a massive form.

The adhesive seal ing member may contain only the res in particles in one of the forms, or may contain the resin particles in two or more forms. In view of easy uniformization of an amount of displacement due to a compression load, easy dispersion in the components of the adhesive sealing member, and the like, the resin particles in spherical form, preferably regular spherical form, are mainly contained.

In addition, the resin particles have a heat-resisting temperature which is higher than a melting point of the thermoplastic resin. Besides, the a heat-resisting temperature refers to a temperature at the time when a decrease in weight of 15 mg of the resin particles reaches 3 wt% when heated in the air at a programming rate of 10°C/min by using a displacement thermobalance. In addition, the melting point of the thermoplastic resin refers to a value measured in accordance with JIS K 7121: Differential Scanning Calorimetry (DSC, heat flux).

When the adhesive sealing member is applied to, for example, a PEFC, the heat-resisting temperature of the resin particles is preferably 150°C or more, more preferably 200°C or more, and still more preferably 250°C or more.

Under the requirement (c), while a lower limit of the heat-resisting temperature of the resin particles is specified, an upper limit thereof is not particularly limited. This is because creep resistance is not impaired even if the heat-resisting temperature is high.

A resin composing the resin particles may be formed of one type of resin, or may be formed by blending two or more types of resins. Inaddition, the resin particles included in the adhesive sealing member may be formed of resin particles composed of one type of resin, or may be formed of a combination of resin particles composed of different types of resins.

In the adhesive sealing member, the resin particles may be composed of any type of resins if the heat-resisting temperature is higher than the melting point of the thermoplastic resin.

The resin composing the resin particles is selected from a crosslinked acrylic polymer and a crosslinked styrene polymer.

An acrylic polymer of the crosslinked acrylic polymer refers to a polymer of acrylic ester, a polymer of methacrylate, and a polymer including acrylic ester or methacrylate as a main component. They may be employed by one sort alone or more than one sort in combination.

Examples of acrylic ester include methyl acrylate, ethyl acrylate, propyl acrylate, isopropyl acrylate, butyl acrylate, isobutyl acrylate, s-butyl acrylate, t-butylacrylate, hexylacrylate, octylacrylate, 2-ethyl hexyl acrylate, isononyl acrylate, decyl acrylate, and dodecyl acrylate.

Examples of methacrylate include methyl methacrylate , ethyl methacrylate, propyl methacrylate, isopropyl methacrylate, butyl methacrylate, isobutyl methacrylate, s-butyl methacrylate, t-butyl methacrylate, hexyl methacrylate, octyl methacrylate, 2-ethyl hexyl methacrylate, isononyl methacrylate, decyl methacrylate, and dodecyl methacrylate.

For the crosslinked acrylic polymer, crosslinked polymethyl acrylate, crosslinked polymethyl methacrylate and the like are suitably used.

A styrene polymer of the crosslinked styrene polymer refers to a polymer of styrene and a polymer including a styrene as a main component. They may be employed by one sort alone or more than one sort in combination.

Examples of the crosslinked styrene polymer include crosslinked polystyrene, a crosslinked styreneacrylonitrile resin, and an acrylonitrile-butadien-styrene resin.

The crosslinking of the resin can be performed by any method. Examples of the crosslinking method include electron-beam irradiation crosslinking, UV crosslinking, and the like. They may be employed by one sort alone or more than one sort in combination.

To the above resin, one or more additives such as a crosslinking agent, a crosslinking aid and an antioxidant may be added as necessary.

In the adhesive sealing member, a content of the resin particles is not particularly limited if necessary creep resistance is obtained. For example, the content may be varied as appropriate in accordance with the areas to be sealed in the fuel cell.

In general, if the content of the resin particles becomes excessively high, an effect of improving creep resistance is saturated, and an adhesive property is lowered. In contrast, if the content of the resin particles becomes excessively low, creep resistance is lowered. Therefore, it is preferable that the content of the resin particles is selected in view of these respects.

For the limits of the content of the resin particles, a preferable upper limit is 50 wt%, 45 wt%, 40 wt%, 35 wt%, 30 wt% or the like, and a preferable lower limit suitably used in combination with the preferable upper limit is 0.5 wt%, 1 wt%, 2 wt%, 3 wt%, 4 wt%, 5 wt% or the like. The content refers to a weight percent of the contained resin particles with respect to the adhesive sealing member.

In the adhesive sealing member, a particle size of the resin particles can be selected as appropriate in view of an amount of space required between the constituent members in the area to be sealed in the fuel cell.

For an average particle size of the resin particles, an upper limit is 50 µm, and a lower limit is 9 µm. A preferable upper limit is 10 µm, 20 µm, 30 µm or 40 µm, and a preferable lower limit is 12 µm or 15 µm.

The average particle size can be measured by a commercially available particle size distribution measuring device (e.g., "Coulter Counter", Beckman Coulter K.K.).

While the adhesive sealing member satisfies at least the above-mentioned requirements (a) to (c) as mentioned above, it may additionally satisfy at least one of the following arbitrary requirements.

### (d) Requirement that the adhesive sealing member is formed into film

The adhesive sealing member may be formed into film. Thickness of the adhesive sealing member is not particularly limited and can be appropriately set in consideration of the amount of space in the area to be sealed.

### (e) Requirement that the thermoplastic resin is denatured by acid

In the adhesive sealing member, the thermoplastic resin may be denatured by acid. By the denaturation, the adhesive sealing member becomes excellent in wettability to a surface of a metal, a resin or the like which is a material of separators, frames and the like being constituent members of the fuel cell. Therefore, there is an advantage that an adhesive property and a sealing property are improved with ease.

In a case where the adhesive sealing member includes a plurality of thermoplastic resins, it is enough that at least one of the thermoplastic resins is denatured by acid.

In a case where the adhesive sealing member includes the rubber, the elastomer and the like being the arbitrary accessory components, they may also be denatured by acid.

The denaturation by acid may be performed by grafting the thermoplastic resin and the like by an acid component, may be performed by copolymerizing them by an acid component, or may be performed by a combination of grafting and copolymerizing. Preferably, the denaturation by grafting is employed in view of comparatively easy denaturation and the like.

Examples of the acid include unsaturated carboxylic acid and/or its derivative, and the like. They may be employed by one sort alone or more than one sort in combination.

Examples of the unsaturated carboxylic acid and/or its derivative include unsaturated carboxylic acid such as maleic acid, fumaric acid, acrylic acid, methacrylic acid, tetrahydrophthalic acid, itaconic acid, citraconic acid, crotonic acid, isocrotonic acid and nadic acid (endocis-bicyclo[2.2.1]hepto-5-ene-2,3-dicarboxylic acid), and acid anhydride, halide, amide, imide and ester such as maleic anhydride, itaconic anhydride, citraconic anhydride, maleyl chloride, maleimide, maleic acid monomethyl, maleic acid dimethyl and glycidyl maleate.

For the acid, unsaturated dicarboxylic acid and/or its derivative (especially, acid anhydride) are preferably used, and more specifically, maleic acid and/or maleic anhydride are preferably used. This is because wettability to the metal surface and the resin surface becomes excellent, so that an adhesive property and a sealing property can be easily improved.

An amount of denaturation by acid (weight percent of the acid component included in the denatured resin, the denatured rubber and the like) is preferably within the limits described below in view of obtaining a sufficient effect.

For the limits of the amount of denaturation by acid, a preferable upper limit is 1.6 wt% or the like, and a preferable lower limit suitably used in combination with the preferable upper limit is 0.01 wt%, 0.3 wt% or the like. The amount of denaturation by acid can be measured by an infrared absorption spectrum method.

### (f) Requirement that a melting point of the thermoplastic resin is in a range of 120 to 145°C

A range of a melting point of the adhesive sealing member can be set so as to maintain an adhesive property and a sealing property at the time of cell operation, mainly in consideration of safety and the like.

The melting point of the adhesive sealing member may be selected as appropriate basically in consideration of heat resistance of the constituent members of the fuel cell (e.g., the electrolyte electrode assembly, the frames and the separators).

To be more specific, the adhesive sealing member is basically for securing an adhesive property and a sealing property by hot melt system; therefore, heat is applied not only to the adhesive sealing member but also to the other constituent members of the fuel cell at the time of manufacturing the fuel cell.

In view of these respects, when the adhesive sealing member is applied to, for example, a PEFC, the range of the melting point preferably extends from 120 to 145°C, and more preferably from 130 to 140°C.

Examples of a method for adjusting the melting point of the thermoplastic resin so as to satisfy the above melting point range include a method of selecting a thermoplastic resin satisfying the requirement from the beginning, a method of blending a plurality of resins, rubbers and the like so as to satisfy the requirement, and a method of disturbing a polymer chain of the contained polymer so as to satisfy the requirement.

The melting point of the thermoplastic resin can be measured in accordance with JIS K 7121: Differential Scanning Calorimetry (DSC, heat flux).

### (g) Requirement that a temperature at which storage modulus of longitudinal elasticity at 23°C is reduced by a factor of 10 or more is 90°C or more

In the case of applying the adhesive sealing member to a PEFC, it is preferable that a temperature at which storage modulus of longitudinal elasticity at 23°C of the adhesive sealing member is reduced by a factor of 10 or more is 90°C or more.

The elasticity of the adhesive sealing member is appropriate when the requirement is satisfied; therefore, an adhesive property and a sealing property are easily maintained at the time of cell operation.

The storage modulus of longitudinal elasticity is measured for the adhesive sealing member which is molded to be 5 mm in width, 20 mm in length and 50 µm in thickness, to which vibration distortion in a tensile direction (frequency: 10Hz; distortion: ±10 µm) is given, by a dynamic viscoelasticity measuring device (e.g., "Rheogel-E4000", UBM Co., Ltd.).

Examples of a method for adjusting the adhesive sealing member so as to satisfy the requirement include a method of selecting a thermoplastic resin satisfying the requirement from the beginning, and a method of blending a plurality of resins, rubbers and the like so as to satisfy the requirement.

### (h) Requirement that a melt flow rate (MFR) is 4 g/10 min or more

A melt flow rate (230°C) of the adhesive sealing member is preferably 4 g/10 min or more, more preferably 7 g/10 min or more, and still more preferably 10 g/10 min or more. The MFR is a value measured in accordance with JIS K When the MFR of the adhesive sealing member satisfies the requirement, a flow property and the like become excellent, so that adhesiveness of the area to be sealed is easily improved.

### 2. Method for manufacturing adhesive sealing member

An example of a method for manufacturing the adhesive sealing member will be described.

First, the thermoplastic resin is heated and molten at a predetermined temperature. In the case of using the rubber, the elastomer and the like, they may be heated and molten together with the thermoplastic resin. Next, a necessary amount of the resin particles is blended into the obtained heated and molten material to be heated and kneaded for a predetermined period of time at a predetermined temperature. In principle, the adhesive sealing member can be obtained in such a method.

The heating and melting and the heating and kneading can be performed, for example, in an atmosphere of an inert gas. In addition, the heating and melting and the heating and kneading may be performed in the presence of a solvent such as an aromatic solvent. As necessary, an additive such as a radical initiator and an antioxidant may be added.

In the case of performing the denaturation by acid, for example, before blending the resin particles, the acid such as unsaturated carboxylic acid may be put in the heated and molten material at one time or at more than one time to be heated and kneaded for a predetermined period of time at a predetermined temperature.

The formation into film of the adhesive sealing member can be performed by press molding, extrusion molding (T-die), inflation molding, and the like.

### 3. Fuel cell

The fuel cell has a laminated body which is formed by laminating a plurality of conventionally known single cells. The fuel cell is characterized in that, in a cell structure, all or a part of the areas to be sealed is sealed by using the adhesive sealing member.

Examples of the cell structure of the single cell include a structure where an electrolyte electrode assembly in which an anode is bonded to one side of an electrolyte and a cathode is bonded to the other side is sandwiched between a pair of separators, a structure where an electrolyte projecting from an electrolyte electrode assembly is supported by a pair of frames and the electrolyte electrode assembly with the frames is sandwiched between a pair of separators, and the like.

In the case of the fuel cell including the single cell as above, the adhesive sealing member may be provided to an area between a part of the electrolyte which extends beyond electrodes in the electrolyte electrode assembly and the separator, an area between a part of the electrolyte which extends beyond electrodes in the electrolyte electrode assembly and the frames supporting it, and an area between the frames and the separators. In addition, the adhesive sealing member may be provided to an area between the separators of adjacent single cells.

### Example

A detailed description of the present invention will be described based on Examples. Adhesive sealing members consistent with Examples and Comparative Examples below can be suitably used in a polymer electrolyte fuel cell (PEFC).

### 1. Preparation of adhesive sealing member

### Example 1

60 g of polypropylene ("Sumitomo Noblen", Sumitomo Chemical Co., Ltd.) and 0.6 g of maleic anhydride (Kanto Chemical Co., Inc.) were put into a compact internal mixer with a mixer volume of 100 cc to be heated and molten at 240°C together with organic peroxide ("PERCUMYL D", NOF Corporation).

Next, 0.3 g (0.5 wt%) of resin particles composed of crosslinked polymethyl methacrylate ("Chemisnow Mx", Soken Chemical & Engineering Co., Ltd.) was put in the heated and molten material, which was kneaded for 5 minutes at 240°C. Then, thus-obtained maleic anhydride denatured polypropylene in which the resin particles were dispersed was pressed to be molded into a film at a thickness of 120 µm. Thus, an adhesive sealing member consistent with Example 1 was obtained.

A heat-resisting temperature was measured for the resin particles. Specifically, with the use of a thermobalance ("TGA-50", Shimadzu Corporation), 15 mg of the resin particles were heated at a programming rate of 10°C/min in the air and a temperature when the weight of the resin particles was reduced by 3wt%, i.e., the heat-resisting temperature, was measured. The heat-resisting temperature was 260°C. In addition, a melting point of the polypropylene measured by Differential Scanning Calorimetry (DSC, heat flux) in accordance with JIS K 7121 was 135°C.

An average particle size of the resin particles, which was measured by "Coulter Counter", Beckman Coulter K. K. , was 30 µm.

An amount of denaturation by the maleic anhydride in the adhesive sealing member consistent with Example 1 was measured by the infrared absorption spectrummethod. Specifically, infrared absorption spectrum of the adhesive sealing member prepared as above was measured by a transmission method, and based on the obtained peak intensity of the maleic anhydride in the vicinity of 1800cm⁻¹ and an amount of the acid obtained by titration, an analytical curve was generated to obtain the amount of denaturation. The amount of denaturation by the maleic anhydride making up the maleic anhydride denatured polypropylene was 0.8 wt%.

A relation between a temperature and storage modulus of longitudinal elasticity of the adhesive sealing member consistent with Example 1 was measured. Specifically, the adhesive sealing member consistent with Example 1 was molded into a molded body of 5 mm in width, 20 mm in length and 50 µm in thickness, and the molded body was placed in a dynamic viscoelasticity measuring device ("Rheogel-E4000", UBM Co., Ltd.) to obtain the relation between the temperature and the storage modulus of longitudinal elasticity.

Measurement conditions thereof were set as a tensile mode, frequency: 10Hz, initial load: automatic mode, distortion: ±10µm, temperature range: -40 to 200°C, programming rate: 3°C/min, and measurement interval : 2°C.

The storage modulus of longitudinal elasticity at 23°C was 5.80×10⁸(Pa). In addition, the temperature at which the storage modulus of longitudinal elasticity at 23°C of the adhesive sealing member was reduced by a factor of 10 was 104°C, which was higher than 90°C being the operating temperature of the PEFC.

### Example 2

An adhesive sealing member consistent with Example 2 was prepared in the same manner as the adhesive sealing member consistent with Example 1 except for including 3 g (5 wt%) of the resin particles.

### Example 3

An adhesive sealing member consistent with Example 3 was prepared in the same manner as the adhesive sealing member consistent with Example 1 except for including 6 g (10 wt%) of the resin particles.

### Example 4

An adhesive sealing member consistent with Example 4 was prepared in the same manner as the adhesive sealing member consistent with Example 1 except for including 18 g (30 wt%) of the resin particles.

### Example 5

An adhesive sealing member consistent with Example 5 was prepared in the same manner as the adhesive sealing member consistent with Example 1 except for using 6 g (10 wt%) of resin particles composed of crosslinked polystyrene (an average particle size: 25 µm) ("Chemisnow SGP", Soken Chemical & Engineering Co., Ltd.) instead of using the above resin particles. A heat-resisting temperature of the resin particles was 255°C.

### Comparative Example 1

An adhesive sealing member having a conventional epoxy resin as a main component ("EP331", Cemedine Co., Ltd.) was employed as an adhesive sealing member consistent with Comparative Example 1.

### Comparative Example 2

An adhesive sealing member consistent with Comparative Example 2 was prepared in the same manner as the adhesive sealing member consistent with Example 1 except for containing no resin particles.

### Comparative Example 3

An adhesive sealing member consistent with Comparative Example 3 was prepared in the same manner as the adhesive sealing member consistent with Example 1 except for using 6 g (10 wt%) of resin particles composed of non-crosslinked polymethyl methacrylate ("Chemisnow MP", Soken Chemical & Engineering Co., Ltd.) instead of using the above resin particles. A heat-resisting temperature of the resin particles was 100°C.

### 2. Adhesion force of adhesive sealing members

First, for the purpose of checking whether or not the adhesive sealing members had an adhesive property being basic capability, a T-shape peel test was performed as described below.

Specifically, stainless plates in a strip shape of 1 cm in width and 0.1 mm in thickness were prepared, and surfaces of which were degreased. Then, each of the adhesive sealing members was placed between a pair of the stainless plates, and heated and compressed at a heating temperature of 150°C and an amount of compression of 10 to 50 µm. Thus, samples A1 to A5 corresponding to Examples 1 to 5 and samples B1 to B3 corresponding to Comparative Examples 1 to 3 were prepared.

Next, each of the samples was mounted on a tensile tester. One edge of the stainless plate above the sample was held tight by an upper holding jig of the tensile tester. In addition, one edge of the stainless plate below the sample was held tight by a lower holding jig of the tensile tester.

Next, the upper holding jig of the tensile tester was pulled at a head speed of 10 mm/min to peel off the stainless plates from the adhesive sealing member. Then, a T-shape peel strength was obtained for the sample in accordance with JIS K 6256 Appendix. This test was performed at a room temperature and in an atmosphere of 90°C.

Table 1 to be described later provides respective rates of the T-shape peel strengths (T-shape peel strength indexes) of the samples as reference data with reference to the T-shape peel strength of the sample B1 (100) corresponding to Comparative Example 1.

### 3. Evaluation of adhesive sealing members 3.1 Time for bonding

A time for bonding at 150°C was measured for the adhesive sealing members. The ones of which the time for bonding was shorter than the conventional adhesive sealing member consistent with Comparative Example 1 were regarded as passed, and the ones of which the time for bonding was equal to or longer than the conventional adhesive sealing member consistent with Comparative Example 1 were regarded as failed.

### 3.2 Creep resistance

A creep resistance test was performed on the adhesive sealing members. First, adhesive sealing members consistent with Examples 1 to 5 and Comparative Examples 1 to 3 formed into a film of 1 cm in length, 1 cm in width and 50 µm in thickness were prepared.

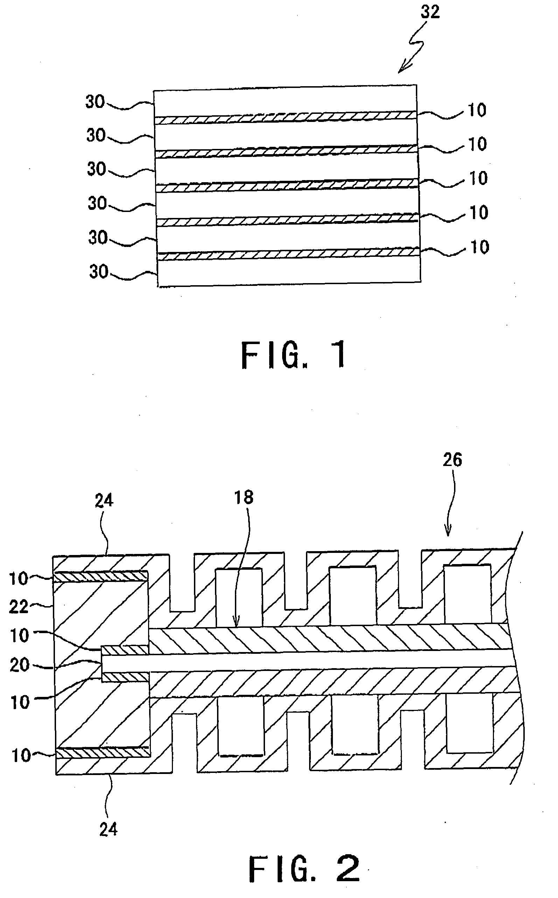

Next, six stainless plates of 1 cm in length, 1 cm in width and 100 µm in thickness were prepared with respect to each of the adhesive sealing members, and as shown in Fig. 1, the five adhesive sealing members 10 were alternately placed between the six stainless plates 30 to prepare a laminated sample 32 with respect to each of Examples 1 to 5 and Comparative Examples 1 to 3.

Then, creep amounts were obtained according to the following procedure. First, the laminated samples were maintained for 30 minutes in an atmosphere of 90°C. A force of 0.01 MPa was applied to the laminated samples in an atmosphere of 90°C, and zero adjustment in thickness measurement was made. Then, a force of 3 MPa was applied to the laminated samples in an atmosphere of 90°C, the respective thicknesses of the laminated samples were measured immediately (after 15 seconds) as initial thickness, and the respective thicknesses of the laminated samples after a lapse of 500 hours were measured. A difference between the initial thickness and the thickness after the lapse of 500 hours was regarded as the creep amount.

Table 1 to be described later provides the respective rates of the creep amounts (creep indexes) of the samples with reference to the creep amount of the sample B1 (100) corresponding to Comparative Example 1. In the creep resistance test, the ones of which the creep index was less than 100 were regarded as passed, and the ones of which the creep index was 100 or more were regarded as failed.

Table 1 provides details of the prepared adhesive sealing members consistent with Examples and Comparative Examples and results of the above-mentioned tests.

**Table 1.**

| | | | Example 1 | Example 2 | Example 3 | Example 4 | Example 5 | Comparative Example 1 | Comparative Example 2 | Conparative Example 3 |
|---|---|---|---|---|---|---|---|---|---|---|
| Type of fuel cell | | | PEFC | PEFC | PEFC | PEFC | PEFC | PEFC | PEFC | PEFC |
| Main component | | | PP | PP | PP | PP | PP | Epoxy | PP | PP |
| Resin particle | Contained | | Yes | Yes | Yes | Yes | Yes | No | No | Yes |
| | Type of resin | | Crosslinked polymethyl methacrylate | Crosslinked polymethyl methacrylate | Crosslinked polymethyl methacrylate | Crosslinked polymethyl methacrylate | Crosslinked polystyrene | - | - | Polymethyl methacrylate |
| | Heat resistance temperature (°C) | | 150°C< | 150°C< | 150°C< | 150°C< | 150°C< | - | - | 100°C |
| | Content (wt%) | | 0.5 | 5 | 10 | 30 | 10 | - | - | 10 |
| | Average particle size (µm) | | 30 | 30 | 30 | 30 | 25 | - | - | 30 |
| Form | | | Film | Film | Film | Film | Film | Two-liquid liquid | Film | Film |
| Adhesion force | T-shape peel strength index at 23°C | | 119 | 124 | 114 | 102 | 133 | 100 | 114 | 105 |
| | T-shape peel strength index in atomosphere of 90°C | | 127 | 127 | 118 | 105 | 136 | 100 | 100 | 91 |
| | Peel interface | | Cohesive failure | Cohesive failure | Cohesive failure | Cohesive failure | Cohesive failure | Delamination | Delamination | Cohesive failure |
| Time for bonding at 150°C (min) | | | 10 | 10 | 10 | 10 | 10 | 60 | 10 | 10 |
| Creep resistance | | Creep index | 58 | 50 | 42 | 67 | 50 | 100 | 108 | 104 |
| Comprehensive assessment | | | Passed | Passed | Passed | Passed | Passed | - | Failed | Failed |

| | | | | | | | | | | |
|---|---|---|---|---|---|---|---|---|---|---|
| Note 1 PEFC: polymer electrolyte fuel cell Note 2 PP: polypropylene Note 3 Operating temperature of PEFC in Examples and Comparative Examples: 90°C Note 4 T-shape peel strength index: rate of T-shape peel strength with reference to T-shape peel strength of Comparative Example 1(100) Note 5 Creep index: rate of creep amount with reference to creep amount of Comparative Example 1(100) | | | | | | | | | | |

From Table 1, the followings are known. It is clear that the adhesive sealing members consistent with Examples 1 to 5 have adhesive strengths as much as or greater than the adhesive sealing member consistent with Comparative Example 1 including the conventional epoxy resin as the main component.

Therefore, it has been shown that the adhesive sealing members consistent with Examples 1 to 5 have an adhesive property being basic capability since such a problem that the adhesive property of the adhesive sealing members is considerably impaired by the blending of the resin particles hardly arises.

In addition, it is clear that the respective times for bonding of the adhesive sealing members consistent with Examples 1 to 5 are 10 minutes, which is shorter than the adhesive sealing member consistent with Comparative Example 1. Therefore, it has been shown that the adhesive sealing members consistent with Examples 1 to 5 can be bonded within a very short period of time as compared with the conventional one, and are excellent in productivity of fuel cells.

The form of the adhesive sealing member consistent with Comparative Example 1 is a two-liquid liquid form, while the forms of the adhesive sealing members consistent with Examples 1 to 5 are film forms. Therefore, by bonding the adhesive sealing members consistent with Examples 1 to 5 to the separators, the frames and the like, complicated positioning process can be avoided. In addition, the formation into film makes it easy to perform continuous processing and the like. In addition, advance lamination of the adhesive sealing member to the frames and the like makes it easier to perform processing. Thus, productivity of fuel cells can be improved also in these respects.

In addition, it has been shown that the adhesive sealing members consistent with Examples 1 to 5, which contain the particular resin particles, are excellent in creep resistance as compared to the adhesive sealing member consistent with Comparative Example 1 including the epoxy resin as the main component, the adhesive sealing member consistent with Comparative Example 2 containing no resin particles, and the adhesive sealing member consistent with Comparative Example 3 containing the resin particles of which the heat-resisting temperature is lower than a specified value.

It is concluded that the adhesive sealing members consistent with Examples 1 to 5 are excellent both in creep resistance and productivity of fuel cells.

### 4. Preparation of polymer electrolyte fuel cell and evaluation of sealing property

Polymer electrolyte fuel cells were prepared by using the adhesive sealing members consistent with Examples 1 to 5.

As shown in Fig. 2, a part of a solid electrolyte membrane 20 which extends beyond electrodes in a membrane electrode assembly 18 (MEA, "FC25-MEA", ElectroChem, Inc.) was supported by a frame 22 via adhesive sealing members 10 consistent with Examples 1 to 5, which were further sandwiched between a pair of stainless separators 24 via adhesive sealing members 10 consistent with Examples 1 to 5 so as to be integrated, and a polymer electrolyte fuel cell 26 was prepared with respect to each of Examples 1 to 5. The bonding of the adhesive sealing members was performed by compression bonding for 10 minutes at a temperature of 150°C at a pressure of 2 MPa.

Next, hydrogen and oxygen were supplied respectively to anodes and cathodes of the polymer electrolyte fuel cells consistent with Examples 1 to 5, and a sealing property was checked for 24 hours.

From the result, it is clear that leaking of the gases from the areas to be sealed did not occur, and the sealing property was assured.
It is intended that the scope of the invention be defined by the claims appended hereto.

## Claims

1. An adhesive sealing member satisfying the following requirements:
(a) a requirement that the adhesive sealing member is suitable for use in a fuel cell;
(b) a requirement that the adhesive sealing member includes an olefin thermoplastic resin as a main component; and
(c) a requirement that the adhesive sealing member contains resin particles composed of at least one of a crosslinked acrylic polymer and a crosslinked styrene polymer, the resin particles having a heat-resisting temperature higher than a melting point of the olefin thermoplastic resin and having an average particle size of 9 to 50 µm.

2. The adhesive sealing member according to claim 1,
wherein the content of the resin particles is within a range of 0.5 to 50 wt%.

3. The adhesive sealing member according to claim 1 or 2, wherein the olefin thermoplastic resin includes a propylene resin as a main component.

4. The adhesive sealing member according to any one of claims 1 to 3, further satisfying (e) a requirement that the thermoplastic resin is denatured by acid.

5. The adhesive sealing member according to any one of claims 1 to 3, further satisfying (d) a requirement that the adhesive sealing member is formed into film.

6. A fuel cell, wherein sealing is made by using the adhesive sealing member according to any one of claims 1 to 5.

## Patentansprüche

1. Haftendes Dichtungselement, welches die folgenden Anforderungen erfüllt:
(a) eine Anforderung, dass das haftende Dichtungselement zur Verwendung in einer Brennstoffzelle geeignet ist;
(b) eine Anforderung, dass das haftende Dichtungselement als einen Hauptbestandteil ein thermoplastisches Olefin-Harz beinhaltet; und
(c) eine Anforderung, dass das haftende Dichtungselement Harzpartikel enthält, welche aus mindestens einem Mitglied der aus quervernetzten acrylischen Polymeren und quervernetzen Styrol-Polymeren bestehenden Gruppe zusammengesetzt sind, wobei die Harzpartikel eine Hitzebeständigkeitstemperatur haben, welche höher ist als ein Schmelzpunkt des thermoplastischen Olefin-Harzes, und eine durchschnittliche Partikelgröße von 9 bis 50 µm aufweisen.

2. Haftendes Dichtungselement gemäß Anspruch 1, wobei der Gehalt der Harzpartikel innerhalb einem Bereich von 0,5 bis 50 Gewichts-% liegt.

3. Haftendes Dichtungselement gemäß Anspruch 1 oder 2, wobei das thermoplastische Olefinharz ein Propylenharz als Hauptbestandteil beinhaltet.

4. Haftendes Dichtungselement gemäß einem der Ansprüche 1 bis 3, das ferner eine Anforderung (e) erfüllt, dass das thermoplastische Harz durch Säure denaturiert ist.

5. Haftendes Dichtungselement gemäß einem der Ansprüche 1 bis 3, das ferner eine Anforderung (d) erfüllt, dass das haftende Dichtungselement zu einem Film ausgebildet ist.

6. Brennstoffzelle, wobei eine Dichtung durch Verwendung des haftenden Dichtungselements gemäß einem der Ansprüche 1 bis 5 vorgenommen ist.

## Revendications

1. Elément adhésif d'étanchéité satisfaisant les critères suivants :
(a) un critère selon lequel l'élément adhésif d'étanchéité est approprié pour être utilisé dans une pile à combustible ;
(b) un critère selon lequel l'élément adhésif d'étanchéité comprend une résine thermoplastique à base d'oléfine en tant que composant principal ; et
(c) un critère selon lequel l'élément adhésif d'étanchéité contient des particules de résine composées d'au moins un polymère choisi parmi un polymère acrylique réticulé et un polymère de styrène réticulé, les particules de résine présentant une température de résistance thermique supérieure à un point de fusion de la résine thermoplastique à base d'oléfine et possédant une taille moyenne de particules de 9 à 50 µm.

2. Elément adhésif d'étanchéité selon la revendication 1, dans lequel la teneur en particules de résine se trouve dans une plage allant de 0,5 à 50 % en poids.

3. Elément adhésif d'étanchéité selon la revendication 1 ou 2, dans lequel la résine thermoplastique à base d'oléfine comprend une résine de propylène en tant que composant principal.

4. Elément adhésif d'étanchéité selon l'une quelconque des revendications 1 à 3, satisfaisant en outre (e) un critère selon lequel la résine thermoplastique est dénaturée par l'acide.

5. Elément adhésif d'étanchéité selon l'une quelconque des revendications 1 à 3, satisfaisant en outre (d) un critère selon lequel l'élément adhésif d'étanchéité est formé en film.

6. Pile à combustible, dans laquelle l'étanchéité est obtenue en utilisant l'élément adhésif d'étanchéité selon l'une quelconque des revendications 1 à 5.
